# FASCICULE DE BREVET EUROPEEN

(11) **EP 3 829 895 B1**
(45) Date de publication et mention de la délivrance du brevet: **05.04.2023**
(21) Numéro de dépôt: 19742852.7
(22) Date de dépôt: 07.06.2019
(51) Int. Cl.: B60B 7/04, B60B 7/06, B60B 7/08, B60B 3/10

(54) **SYSTEME DE PROTECTION LATERALE POUR JANTES DE VEHICULES AUTOMOBILES**
SEITENSCHUTZSYSTEM FÜR KRAFTFAHRZEUGFELGEN
LATERAL PROTECTION SYSTEM FOR MOTOR VEHICLE RIMS

(30) Priorité: 30.07.2018 FR 1857061
(43) Date de publication de la demande: 09.06.2021
(73) Titulaire: PSA Automobiles SA, 78300 Poissy (FR)
(72) Inventeur: PALPACUER, Eric, 75013 Paris (FR)
(86) Numéro de dépôt international: PCT/FR2019/051371
(87) Numéro de publication internationale: WO 2020/025867

(56) Documents cités:
- WO-A1-2009/121120
- DE-A1-102011 006 937
- DE-A1-102016 216 067
- DE-U1-202009 013 418
- DE-U1-202018 100 103

## Description

La présente invention concerne un ensemble pour roue de véhicule automobile comprenant un système de protection des jantes, et un véhicule automobile comportant de tels ensembles pour roue.

Les véhicules automobiles comportent des roues comprenant une jante qui peut être formée avec des tôles métalliques embouties en acier ou en alliage léger, ou par le moulage d'un alliage léger, notamment un alliage d'aluminium.

Chaque jante comporte un moyeu équipé de perçages recevant des vis de fixation sur un porte-moyeu de la suspension, et un contour circulaire extérieur présentant une section transversale formant un profilé comprenant deux rebords recevant entre eux le pneumatique.

Dans le cas des jantes en tôles, un flasque formant le moyeu est relié au contour extérieur. Dans le cas d'une jante en alliage moulé, l'ensemble de la jante est généralement formé par un moulage en une seule pièce, comprenant à la fois le moyeu, le contour extérieur, et des liaisons radiales formant des rayons reliant ces deux parties.

Les jantes en tôles en particulier, et certaines jantes en alliage, reçoivent un enjoliveur formant un plateau en matière plastique couvrant la face externe pour décorer la roue, qui est généralement fixé par un système de clipsage sur un rebord du contour extérieur.

Pour les jantes en alliage moulé on réalise souvent directement dans la fonderie des formes particulières constituant les rayons, qui contribuent à l'esthétique du véhicule. Ces jantes peuvent être peintes ou vernies, avec des parties qui peuvent être traitées différemment pour obtenir l'esthétique voulue. Suivant le type de véhicule on peut donner aux jantes un aspect plus luxueux ou plus sportif.

Toutefois il est courant d'obtenir près d'un obstacle, notamment lors d'un stationnement du véhicule près d'un trottoir, un frottement sur cet obstacle du contour extérieur de la jante qui continue à tourner, entraînant des dommages, notamment des éraflures sur le revêtement de surface de la jante, ou dans le métal même dans le cas d'entailles plus profondes.

Pour éviter ce problème un type de protection connu, présenté notamment par le document DE-A1-102016113234, comporte une couronne venant en appui sur le contour extérieur de la jante, qui est fixée sur des lamelles coincées axialement entre le talon externe du pneumatique et le rebord formé par ce contour extérieur.

Un autre type de protection connu de la jante, présenté notamment par le document GB-A-2433057, forme un plateau comprenant un moyeu, un contour extérieur et des rayons, certains de ces rayons étant fixés à la jante de la roue par des colliers en matière plastique.

Les documents DE 20 2009 013418 U1 et WO 2009/121120 A1 présentent d'autres dispositifs de protection.

Ces différentes protections sont relativement compliquées et longues à installer, nécessitant des manipulations pour les attacher sur la roue ce qui limite leurs usages. De plus dans les deux cas elles comportent une couronne continue couvrant le contour extérieur, ce qui recouvre en grande partie la jante en lui faisant perdre son côté esthétique.

Par ailleurs dans le cas de plus en plus fréquent de véhicules utilisés par plusieurs conducteurs, notamment pour des véhicules de location ou pour des organisations de partage d'un même véhicule, on a des temps d'adaptation des conducteurs aux véhicules et plus de risques d'une attention réduite, pouvant entraîner plus de petits dommages. Les risques de chocs sur les jantes sont plus importants, et les coûts d'entretien et de réparation augmentent dans le cas où on veut conserver un bel état du véhicule.

La présente invention a notamment pour but d'éviter ces inconvénients de la technique antérieure.

Elle propose à cet effet un ensemble pour roue de véhicule tel que décrit dans la revendication 1.

Un avantage de cet ensemble pour roue de véhicule comprenant une jante en tôle comme en alliage, est que de manière simple et efficace, par un simple ajustement puis un appui axial de chaque protecteur dans une ouverture, on obtient un système de protection réparti sur le contour de cette jante.

L'ensemble pour roue selon l'invention peut de plus comporter une ou plusieurs des caractéristiques suivantes, qui peuvent être combinées entre elles.

Le système de clipsage peut comporter des clips de verrouillage formant une courbure qui se termine par un bord élastique tourné radialement vers l'extérieur du protecteur, dépassant au-delà du contour de l'ouverture pour se positionner en arrière du bord de l'ouverture.

Avantageusement, la face arrière de chaque protecteur comporte des plots de centrage s'ajustant dans l'ouverture.

Dans ce cas, avantageusement chaque protecteur comporte un plot de centrage dans chaque angle de son contour.

Avantageusement, le côté arrière de chaque protecteur comporte un contour arrière en appui sur une surface avant du flasque entourant l'ouverture.

Avantageusement, la face avant de chaque protecteur dépasse de plus de trois millimètres de la surface transversale la plus avancée de la jante.

En complément, les protecteurs peuvent comporter des marquages sur leurs faces avant.

L'invention a aussi pour objet un véhicule automobile équipé de roues, chaque roue comportant un ensemble pour roue comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue d'une roue comprenant un ensemble pour roue selon l'invention comportant une jante en alliage léger, qui est garée contre une bordure de trottoir ;
- les figures 2 et 3 sont des vues respectivement du côté avant et du côté arrière d'un protecteur du système de protection de cet ensemble pour roue ; et
- la figure 4 est une vue de détail de cette roue en coupe axiale suivant le plan de coupe IV-IV.

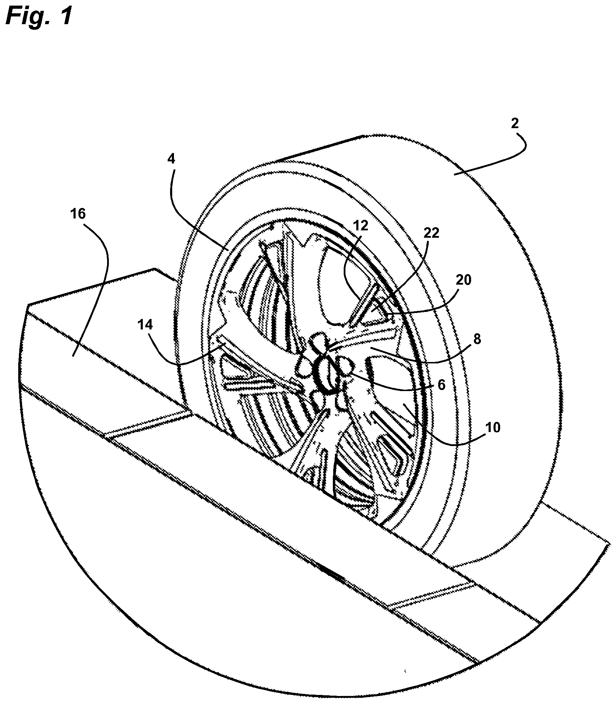

La figure 1 présente une roue comportant une jante recevant un pneumatique 2, formée par un moulage d'alliage d'aluminium, comprenant un moyeu central 6 relié à un contour extérieur 4 par cinq branches principales 8 formant un flasque fortement ajouré.

Chaque branche principale 8 constitue un rayon présentant une section transversale sensiblement triangulaire réalisant une forme fortement galbée. La face avant de cette branche principale 8 tournée vers l'extérieur du véhicule, comporte une arrête 14 constituant un élément de décor, qui peut recevoir en particulier une coloration ou un traitement de surface spécifique.

Deux branches principales consécutives 8 présentent entre elles une grande ouverture 10.

Chaque branche principale 8 inclinée d'un côté par rapport à la direction radiale de la roue, reçoit une petite branche annexe de faible largeur 12 inclinée de l'autre côté, avec entre elles un angle d'environ 30°, en constituant avec le contour extérieur 4 une petite ouverture présentant une forme triangulaire.

Chaque petite ouverture reçoit un protecteur 20 formé par le moulage d'une matière plastique, comprenant du côté arrière des parties de centrage et de clipsage sur le contour de cette petite ouverture. Chaque protecteur 20 comporte une face avant plate 22 parallèle au plan extérieur transversal de la jante, qui dépasse légèrement de ce plan de quelques millimètres afin de venir au contact d'une bordure de trottoir 16 en protégeant la jante dans le cas où le conducteur s'approcherait trop près du trottoir. En particulier le dépassement peut être d'au moins trois millimètres pour assurer une protection efficace de la jante.

On obtient cinq protecteurs 20 répartis sur la jante juste en dessous de son contour extérieur 4, qui peuvent être facilement posés est déposés par un simple clipsage sur cette jante, constituant une protection efficace. On notera que le système de protection déposé est constitué de cinq petits protecteurs 20, peu encombrants, qui peuvent facilement se ranger dans un espace réduit du véhicule.

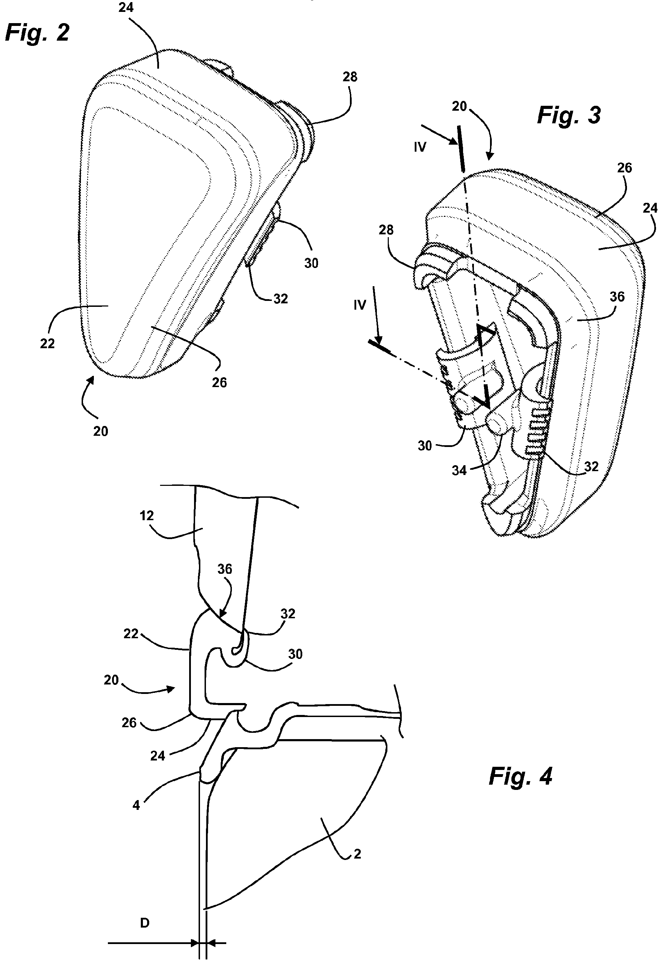

Les figures 2, 3 et 4 présentent un protecteur 20 formant un boîtier triangulaire présentant des angles arrondis, comprenant la face avant plate 22, et un contour axial 24 relié à cette face avant par des rayons 26. On a ensuite après le contour axial 24 un contour arrière 36 se resserrant vers le centre du protecteur 20.

La face avant plate 22 présente une distance axiale D de plusieurs millimètres par rapport au plan transversal le plus extérieur de la jante, formé généralement par son contour extérieur 4 recevant le pneumatique, qui constitue une marge de protection permettant un appui sur un obstacle extérieur comme une bordure de trottoir 16, pour protéger cette jante.

La face arrière du protecteur 20 qui est creuse, comporte dans chaque angle un plot de centrage 28 dépassant vers l'arrière, réalisant le centrage de ce protecteur dans l'ouverture de la jante le recevant.

La face arrière comporte aussi sur chaque grand côté un clip de verrouillage 30 qui part du fond du creux de cette face, puis forme une courbure vers le centre du protecteur 20, pour se terminer par un bord 32 tourné radialement vers l'extérieur, dépassant légèrement du contour de la petite ouverture.

De cette manière en poussant chaque protecteur 20 sur une petite ouverture de la jante, on a d'abord un centrage de ce protecteur dans l'ouverture grâce aux trois plots de centrage 28 disposant d'un chanfrein d'entrée pour faciliter cet ajustement, puis ensuite un rapprochement des deux clips de verrouillage 30 l'un vers l'autre grâce à une pente d'extrémité de ces clips, et à leur élasticité donnée par leur longueur libre.

On a ensuite quand le protecteur 20 est arrivé en bout de course un écartement des deux clips de verrouillage 30 l'un de l'autre, leurs bords 32 se détendant en passant derrière le contour de l'ouverture.

Pendant une manoeuvre de poussée sur un obstacle le protecteur 20 prend appui sur la jante par son contour arrière se resserrant 36, qui est lui-même en appui sur les surfaces avant entourant l'ouverture de la jante pour lui transmettre l'effort. De cette manière on obtient une résistance importante du protecteur 20 qui ne peut s'enfoncer, et assure son rôle en repoussant la roue de l'obstacle pour la protéger.

Chaque clip de verrouillage 30 comporte un plot cylindrique axial 34 qui dépasse du côté arrière, permettant à un opérateur après la dépose d'une roue de les saisir pour les rapprocher l'un de l'autre. De cette manière on dégage leurs bords 32 du contour de la petite ouverture afin les rentrer dans cet espace, puis on retire le protecteur 2 en le poussant vers le côté avant.

On notera que le nombre de protecteurs 2 peut être variable, en particulier à partir de trois pour en conserver au moins un en appui sur une bordure de trottoir. En variante ils peuvent disposer d'une grande surface avant 22, en s'ajustant par exemple dans les grandes ouvertures de la jante 10. Ils peuvent aussi présenter une surface avant 2 dépassant largement des ouvertures qui les reçoivent.

D'une manière générale les protecteurs 2 peuvent s'ajuster sur tout type d'ouverture formée sur un flasque de jante, qui peut être en alliage moulé ou en tôle.

L'entretien du véhicule est rapide et économique avec un simple échange des protecteurs en matière plastique 22 en cas de marquage ou d'usure, qui présentent un coût très réduit.

De plus les protecteurs 22 peuvent par leurs formes ou leurs couleurs apportées une touche esthétique à la roue. En complément on peut effectuer dessus une personnalisation avec un marquage esthétique, ou publicitaire, par exemple pour la marque de location ou de la société de partage des véhicules, qui ajoute un intérêt au produit.

## Revendications

1. - Ensemble pour roue de véhicule comportant une jante comprenant un flasque reliant un moyeu (6) à un contour extérieur (4), présentant des ouvertures, et un système de protection latérale contre des dommages, notamment des éraflures sur le revêtement de surface de la jante ou contre des chocs sur la jante, ledit système de protection venant sur la face avant de cette jante tournée vers l'extérieur du véhicule, le système de protection comportant plusieurs protecteurs (20) présentant chacun une partie arrière s'ajustant dans une ouverture, disposant sur sa partie arrière de moyens d'accrochage autour de cette ouverture, et une face avant (22) dépassant en avant de la surface transversale la plus avancée de la jante, les moyens d'accrochage comportant un système de clipsage (30) autour de l'ouverture, **caractérisé en ce que** les clips de verrouillage comportent des plots (34) dépassant du côté arrière, permettant à un opérateur une saisie pour les écarter du contour de l'ouverture

2. - Ensemble pour roue selon la revendication 1, **caractérisé en ce que** le système de clipsage (30) comporte des clips de verrouillage formant une courbure qui se termine par un bord élastique (32) tourné radialement vers l'extérieur du protecteur (20), dépassant au-delà du contour de l'ouverture pour se positionner en arrière du bord de l'ouverture.

3. - Ensemble pour roue selon l'une quelconque des revendications précédentes, **caractérisé en ce que** la face arrière de chaque protecteur (20) comporte des plots de centrage (28) s'ajustant dans l'ouverture.

4. - Ensemble pour roue selon la revendication 3, **caractérisé en ce que** chaque protecteur (20) comporte un plot de centrage (28) dans chaque angle de son contour.

5. - Ensemble pour roue selon l'une quelconque des revendications précédentes, **caractérisé en ce que** le côté arrière de chaque protecteur (20) comporte un contour arrière (36) en appui sur une surface avant du flasque entourant l'ouverture.

6. - Ensemble pour roue selon l'une quelconque des revendications précédentes, **caractérisé en ce que** la face avant (22) de chaque protecteur (2) dépasse de plus de trois millimètres de la surface transversale la plus avancée de la jante.

7. - Ensemble pour roue selon l'une quelconque des revendications précédentes, **caractérisé en ce que** les protecteurs (20) comportent des marquages sur leurs faces avant (22).

8. - Véhicule automobile équipé de roues, **caractérisé en ce que** chaque roue comporte un ensemble pour roue selon l'une quelconque des revendications précédentes.

## Patentansprüche

1. Anordnung für ein Fahrzeugrad mit einer Felge mit einem Flansch, der eine Nabe (6) mit einer Außenkontur (4) verbindet, die Öffnungen aufweist, und mit einem seitlichen Schutzsystem gegen Beschädigung, insbesondere Kratzer an der Felgenoberflächenbeschichtung oder Stöße auf die Felge, wobei das Schutzsystem auf die Vorderseite der Felge, die zur Außenseite des Fahrzeugs weist, kommt, wobei das Schutzsystem mehrere Schutzvorrichtungen (20) aufweist, die jeweils einen hinteren Teil aufweisen, der in eine Öffnung passt und an seinem hinteren Teil Befestigungsmittel um diese Öffnung herum angeordnet sind, und eine Vorderseite (22), die von der Vorderseite vorsteht Die vorderste Querschnittsfläche der Felge, wobei die Befestigungsmittel ein Einrastsystem (30) um die Öffnung herum aufweisen, **dadurch gekennzeichnet, dass** die Verriegelungsclips Klötze (34) aufweisen, die von der Rückseite abstehen und es einem Bediener ermöglichen, einen Eingriff vorzunehmen, um sie von der Kontur der Öffnung wegzubewegen.

2. Radbaugruppe nach Anspruch 1, **dadurch gekennzeichnet, dass** das Einrastsystem (30) eine Krümmung bildende Verriegelungsclips aufweist, die in einem elastischen Rand (32) endet, der radial nach außen von dem Schutz (20) abgewandt ist und über die Kontur der Öffnung hinausragt, um sich hinter dem Rand der Öffnung zu positionieren.

3. Radbaugruppe nach einem der vorhergehenden Ansprüche, **dadurch gekennzeichnet, dass** die Rückseite jedes Schützers (20) Zentrierstifte (28) aufweist, die in die Öffnung passen.

4. Radbaugruppe nach Anspruch 3, **dadurch gekennzeichnet, dass** jeder Schutz (20) in jedem Winkel seiner Kontur einen Zentrierstift (28) aufweist.

5. Radbaugruppe nach einem der vorhergehenden Ansprüche, **dadurch gekennzeichnet, dass** die Rückseite jedes Schutzschildes (20) eine hintere Kontur (36) aufweist, die sich auf einer Vorderfläche des Flansches abstützt, der die Öffnung umgibt.

6. Radbaugruppe nach einem der vorhergehenden Ansprüche, **dadurch gekennzeichnet, dass** die Vorderseite (22) jedes Schützers (2) mehr als drei Millimeter über die vorderste Querfläche der Felge hinausragt.

7. Radbaugruppe nach einem der vorhergehenden Ansprüche, **dadurch gekennzeichnet, dass** die Schutzeinrichtungen (20) an ihren Vorderseiten (22) Markierungen aufweisen.

8. Kraftfahrzeug mit Rädern, **dadurch gekennzeichnet, dass** jedes Rad eine Radanordnung nach einem der vorhergehenden Ansprüche aufweist.

## Claims

1. Assembly for a vehicle wheel comprising a rim comprising a flange connecting a hub (6) to an external contour (4), having openings, and a system for lateral protection against damage, in particular scratches on the surface coating of the rim or against impacts on the rim, said protection system coming on the front face of this rim turned towards the outside of the vehicle, the protection system comprising several protectors (20) each having a rear part fitting into an opening, having on its rear part means for hooking around this opening, and a front face (22) projecting forward of the transverse surface more advance of the rim, the fastening means comprising a clipping system (30) around the opening, **characterized in that** the locking clips comprise studs (34) protruding from the rear side, allowing an operator to grasp them in order to move them away from the contour of the opening.

2. Wheel assembly according to claim 1, **characterized in that** the clipping system (30) comprises locking clips forming a curvature which terminates in an elastic edge (32) turned radially towards the outside of the protector (20), projecting beyond the contour of the opening in order to be positioned behind the edge of the opening.

3. Wheel assembly according to any one of the preceding claims, **characterized in that** the rear face of each protector (20) comprises centering studs (28) which fit into the opening.

4. Wheel assembly according to claim 3, **characterized in that** each protector (20) comprises a centering stud (28) in each corner of its contour.

5. Wheel assembly according to any one of the preceding claims, **characterized in that** the rear side of each protector (20) comprises a rear contour (36) resting on a front surface of the flange surrounding the opening.

6. Assembly for a wheel according to any one of the preceding claims, **characterized in that** the front face (22) of each protector (2) exceeds by more than three millimetres the most advanced transverse surface of the rim.

7. Wheel assembly according to any one of the preceding claims, **characterized in that** the guards (20) have markings on their front faces (22).

8. Motor vehicle equipped with wheels, **characterized in that** each wheel comprises a wheel assembly according to any one of the preceding claims.
